Europäisches Patentamt

European Patent Office

Office européen des brevets

(11) Publication number: **0 095 533**
**A1**

# EUROPEAN PATENT APPLICATION

(21) Application number: 82302790.9

(22) Date of filing: 01.06.82

(51) Int. Cl.³: **B 60 N 1/04**

(43) Date of publication of application: **07.12.83**
**Bulletin 83/49**

(84) Designated Contracting States: **DE FR**

(71) Applicant: **B.S.G. International plc, Burgess House 1270 Coventry Road, Yardley Birmingham, B25 8BB (GB)**

(72) Inventor: **Cunningham, Douglas James, "Sambourne" 4, Church Close Dunton Bassett, Lutterworth Leicestershire (GB)**
Inventor: **Bennett, Brian Stewart, Igelweg 57, D-6090 Russelheim (DE)**
Inventor: **Smallwood, John Charles, 7 Jowett Lakeside, Tamworth Staffordshire (GB)**

(74) Representative: **Hollinghurst, Antony, Britax Central Services 40 Granby Avenue, Garretts Green Birmingham, B33 OSJ (GB)**

(54) **Vehicle seats.**

(57) A vehicle seat (10), particularly for use by the physically handicapped, is mounted for pivotal movement about a first vertical axis (20) on an arm (22) which is secured to a vertical support member (24) which in turn is pivotally coupled to the upper and lower door pillar anchorages by bearings (28). The seat (10) can be swung on its arm (22) from a position of normal use to a position outside the door opening. A guide track (36) secured to the floor of the vehicle is engaged by a traveller on a second arm (32) so as to ensure that the seat (10) faces inwardly as it moves through the door opening.

- 1 -

Vehicle Seats

This invention relates to vehicle seats of the kind which are moveable from their position of normal use to a position facilitating exit and entry by the seat occupant.

U.K. Patent Specification No. 520825 discloses a seat of this type. The seat is pivotally mounted close to the rear of an adjacent door opening. The seat is moveable from its position of normal use to a position facing out through the adjacent door opening. When such a seat is moved from its position of normal use, the occupant leaves the car feet first and he therefore has to tuck his feet out of the way of the front edge of the door opening as the seat pivots on its arm. The present invention is concerned with the provision of a seat which is not subject to this disadvantage.

According to the invention, a vehicle has a side door opening and a seat which is mounted for pivotal movement about a first vertical axis within the plan area of the seat on an arm which is itself mounted for pivotal movement about a second vertical axis outside the plan area of the seat and adjacent to the rear edge of the door opening, so that the seat is moveable between a position of normal use within the vehicle, an intermediate position in which the back of the seat projects through the door opening with the seat facing inwards and a position in which the seat is located outside the door opening.

Preferably, when the seat is in its position of normal use, the first pivot axis is nearer the front of the vehicle than the second pivot axis.

In order to ensure that the seat takes up the required orientation to pass through the door opening, a guide track may be provided on the floor of the vehicle. The guide track is engaged by a traveller carried by a member projecting inwardly from the inboard side of the seat.

In one form of the invention, the seat is mounted by means of seat slides, on a platform which is itself pivotally mounted on the end of the arm so that the position of normal use of the seat can be adjusted longitudinally to the arm. If a guide track is provided, the arm carrying the traveller is secured to this platform.

The mounting means at the second pivot axis may conveniently be secured to the vehicle using the seat belt anchorages provided on the door pillar. In this case, it is necessary to incorporate alternative seat belt anchorages provided in such mounting means.

An embodiment of the invention will now be described, by way of example, with reference to the accompanying drawings, in which

Figure 1 is a schematic plan view of the front half of a motor car fitted with front seats in accordance with the invention with one seat in its position of normal use and the other seat in its end position outside the car.

Figure 2 is a cross-sectional view taken on the line 2 - 2 in Figure 1, and

Figure 3 is a side view of a seat, for use in accordance with the invention, having a footrest.

Referring to the drawings, a motor car 10 has two front seats 12 and 14. The seat 12, which is shown in its position of normal use, is mounted on seat slides 16 and 18 which are themselves mounted on a turntable 20. The turntable 20 is pivotally mounted on one end of a aupport arm 22 which is coupled to a vertical member 24. The vertical member 24 is pivotally mounted in a top bearing 26 on the adjacent rear pillar of the door opening for the seat 12 and a bottom bearing 30 on the floor of the car. The seat belt anchorage on the pillar 28 may be used as an attachment point for the bearing 26. A guide arm 32 is rigidly secured to the turntable 20 so as to project forwardly and inwardly and inwardly from the front inboard corner of the seat 12. On its free end the arm 22 has a leg 34 which carries a traveller (not shown) engaging in a track 36 on the floor of the vehicle. The track 36 has a first section 38 extending diagonally backwardly and outwardly, and a second shorter section 40 extends forwardly and outwardly.

A similar mounting for the seat 14, includes seats slides 42 and 44, a turntable 46, a support arm 48 and a vertical member 50 mounted in top and bottom bearings 52 and 54 adjacent to the corresponding door pillar 46. The seat 14 is also provided with with a guide arm 56, and a leg 58 with a traveller, and a track 60 with two sections 62 and 64 corresponding to the sections 38 and 40 of the track 36.

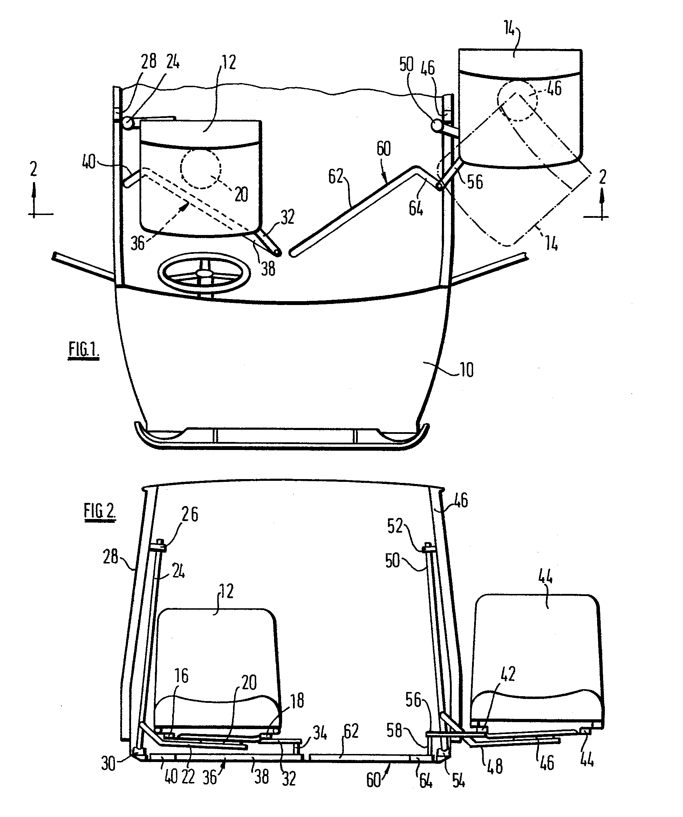

As can best be seen in Figure 1, the seat 12 can be moved from its position of normal use to a position in which the back thereof projects out through the door opening. Only a small amount of forward movement of the seat 12 is necessary before the seat back can clear the door pillar 28 and consequently minimal additional bending of the seat occupant's knees is required to permit this movement. As soon as the seat back can clear the pillar 28, the traveller reaches the junction between the track sections 38 and 40 and the seat 12 starts to swing round the turntable 20 to a position corresponding to that shown in chain-dotted lines for the seat 14, without any further interference between the occupant's feet and any part of the car. During this movement, the traveller on the leg 34 moves along the section 38 of the track 36. Thereafter the seat can pivot to a position corresponding to that shown in solid lines for the seat 14, in which the distance of the front edge of the seat from the open door 48 is comparable with the leg room provided when the seat is inside the car in its position of normal use. During this latter movement, the traveller moves along the secton 40 of the track 36.

The invention is particularly applicable to handicapped persons who are confined to wheelchairs. When such a person wishes to enter the car 10, the seat 12 or 14 is swung to its outer position, and the wheelchair is positioned closely adjacent thereto facing in the same direction. Then, with the arm rest of the wheelchair removed, the disabled person can slide from the wheelchair on to the vehicle seat. The vehicle seat 12 or 14 can then be moved into the car in the normal way. The reverse procedure is followed when the handicapped person wishes to leave the car.

The tracks 36 and 40 are each shown as comprising two straight sections meeting at an angle. Alternatively the junction between the two sections may be in the form of a smooth curve. Either or both of the sections may itself be curved if required.

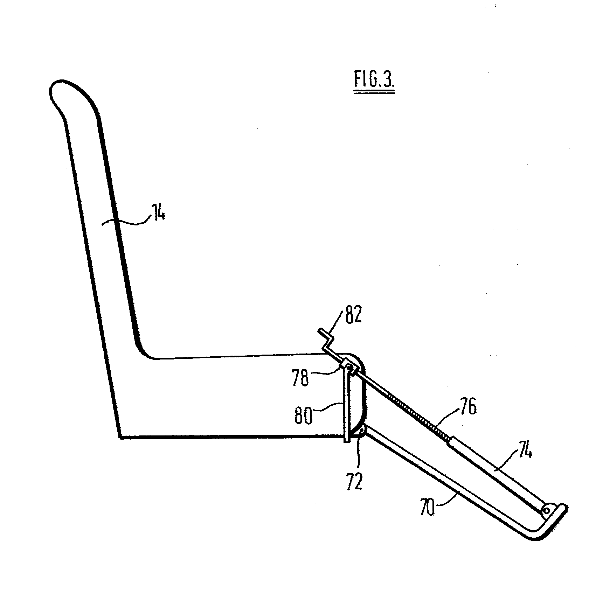

Figure 3 illustrates a modification to the seat 14, in which it is provided with a footrest 70, which is pivotally mounted on the bottom of the front of the seat frame for movement about a transverse horizontal axis 72. An internally screw-threaded tube 74 is pivotally connected to the outer end of the footrest and receives a threaded rod 76 which is freely rotatable but axially immovable relative to a collar 78 which is pivotally mounted on a stem 80 secured to the seat frame. A crank handle 82 is fitted to the upper end of the rod 76 to enable an occupant of the seat 14 to raise the footrest 70 in order to clear the door opening and to lower it on the floor of the car when the seat 14 is in its position of normal use and on to the ground when the seat 14 is outside the car.

## CLAIMS

1.       A vehicle (10)having a side door opening and a seat (14) which is mounted for pivotal movement about a first vertical axis (20) within the plan area of the seat on an arm (22) which is itself mounted for pivotal movement about a second vertical axis (24) outside the plan area of the seat and adjacent to the rear edge of the door opening, so that the seat (12) is movable between a position of normal use within the vehicle (10) and a position in which the seat (12) is located outside the door opening, characterised is that, when the seat (14) is moved between its position of normal use and its position outside the vehicle, it passes through an intermediate position in which the back of the seat projects through the door opening with the seat facing inwards.

2.       A vehicle according to claim 1, characterised in that the first pivot axis (20) is nearer the front of the vehicle than the second pivot axis (24) when the seat (14) is in its position of normal use.

3.       A vehicle according to claim 1 or 2, characterised by guide means (32,36) operative to cause the seat (12) to take up a required orientation to pass through the door opening.

4.       A vehicle according to claim 3, characterised in that the guide means comprises a guide tract (36) mounted on the floor of the vehicle and a traveller (34) engaging the track (36) and mounted on a projection (32) extending inwardly from the inboard side of the seat.

5.       A vehicle according to any preceding claim, characterised in that the seat (12) is mounted by means of seat slides (16,18) on a platform (20) which is itself pivotally mounted on the end of the arm (22)

6.       A vehicle according to any preceding claim, characterised in that the arm (22) is mounted for pivotal movement about the second vertical axis by mounting means (26,30) secured to seat belt anchorages provided on the door pillar (28) of the vehicle (10)

7.       A vehicle according to any preceding claim, characterised in that a footrest (70) is pivotally mounted on the bottom of the front of the seat for movement about a transverse horizontal axis (72) and adjustment means (74,82) are provided for raising and lowering the footrest and securing it in a desired position.

FIG.1.

FIG 2.

FIG.3.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| | --- | | B 60 N 1/04 |
| A | EP-A-0 036 293 (GOWRINGS) *The whole document* | 1,2,5 | |
| | --- | | |
| A | DE-A-2 325 425 (DELANY) *The whole document* | 1,2 | |
| | --- | | |
| A | US-A-2 822 858 (MUSSLER) *The whole document* | 1,3,4 | |
| | --- | | |
| A | FR-A-2 485 454 (SOCIETE ORLEANAISE DE LITERIE ET DE MECANIQUE) *The whole document* | 1,3,4, 5 | |
| | --- | | |
| A | DE-A-2 659 330 (TAXI-RUF BREMEN) *The whole document* | 1,7 | **TECHNICAL FIELDS SEARCHED (Int. Cl. ³)** |
| | --- | | |
| A | FR-A-2 483 222 (SA LOUIS HEULIEZ) *The whole document* | 1,7 | B 60 N 1/04 B 60 N 1/02 B 60 N 3/06 A 61 G 5/00 |
| | --- | | |
| A | FR-A-2 286 724 (VOGEL) *The whole document* | 7 | |
| | ----- | | |

The present search report has been drawn up for all claims

| Place of search THE HAGUE | Date of completion of the search 02-12-1982 | Examiner CORMACI R.C. |
|---|---|---|